# EUROPÄISCHE PATENTANMELDUNG

(11) **EP 3 527 304 A1**
(43) Veröffentlichungstag der Anmeldung: **21.08.2019**
(21) Anmeldenummer: 18157407.0
(22) Anmeldetag: 19.02.2018
(51) Int. Cl.: B22D 29/00, B07B 7/00, B22F 3/24, B33Y 40/00, B29C 64/35, B22F 3/105

(54) **VORRICHTUNG UND VERFAHREN ZUM SEPARIEREN EINES WERKSTOFFS VON MINDESTENS EINEM ADDITIV HERGESTELLTEN BAUTEIL**

(71) Anmelder: Siemens Aktiengesellschaft, 80333 München (DE)
(72) Erfinder: Hartmann, Dirk, 85617 Aßling (DE); Kiener, Christoph, 81369 München (DE)

(57) **Zusammenfassung**

Offenbart ist eine Vorrichtung zum Separieren eines Werkstoffs von mindestens einem additiv hergestellten Bauteil, aufweisend mindestens eine Positionierungsvorrichtung zum Ausrichten des mindestens einen Bauteils, mindestens eine Schwingungsvorrichtung zum Versetzen des mindestens einen Bauteils in Schwingungen und aufweisend eine Steuereinheit zum Ansteuern der mindestens einen Positionierungsvorrichtung und der mindestens einen Schwingungsvorrichtung. Des Weiteren ist ein Verfahren offenbart.

## Beschreibung

Die Erfindung betrifft eine Vorrichtung zum Separieren eines Werkstoffs von mindestens einem additiv hergestellten Bauteil sowie ein Verfahren.

Additive bzw. generative Fertigung ist eine schnell wachsende Fertigungstechnologie mit einem immer größer werdenden industriellen Anwendungsgebiet. Es ist bereits eine Vielzahl von alternativen additiven Fertigungstechnologien für unterschiedlichste Materialien und Anwendungen bekannt.

Pulverbettverfahren können zentralen Technologien, insbesondere für die Fertigung von metallischen Bauteilen, zugeordnet werden. Es wird hierbei ein Pulverbett bzw. ein Werkstoffbett schichtweise bereitgestellt und die einzelnen Partikel des finalen Bauteils Schicht für Schicht miteinander verbunden. Der Werkstoff kann hierbei ein Metall, ein Polymerpulver, ein anorganisches Material oder ein anderes pulverförmiges oder flüssiges Material sein.

Der Werkstoff kann durch physikalische oder chemische Prozesse lokal und schrittweise zu einem Bauteil verklebt bzw. verbunden werden. Dies kann beispielsweise durch Laserschmelzen oder Lasersintern oder UV-Strahlung realisiert werden.

Der nicht-verbundene Werkstoff dient hierbei als eine passive Stützstruktur, sodass beispielsweise überhängende Geometrien realisiert werden können. Ähnliches gilt auch für fluide Medien wie durch UV-Strahlen aushärtbare Monomere, die nach Beendigung des Fertigungsprozesses das Bauteil komplett ausfüllen können.

Bisher wird der Werkstoff aus Hohlräumen des Bauteils manuell entfernt. Dies geschieht sowohl bei pulverförmigen als auch bei flüssigen Werkstoffen. Problematisch ist hierbei, dass viele Pulver und Monomerfluide gesundheitsschädlich sind. Daher müssen zum Reduzieren des gesundheitlichen Risikos entsprechende Schutzmaßnahmen, wie beispielsweise Masken, Handschuhe und Schutzkleidung bei der Ausführung der Separation bzw. der Entleerung des Werkstoffs verwendet werden. Der Arbeitsbereich muss zusätzlich entlüftet und Pulverstäube bzw. Monomerdämpfe abgesaugt werden.

Aufgabe der Erfindung ist es, eine Vorrichtung und ein Verfahren zum automatisierten Reinigen eines Bauteils von einem Werkstoff vorzuschlagen.

Gelöst wird die Aufgabe durch die Gegenstände der unabhängigen Patentansprüche 1 und 11. Vorteilhafte Ausgestaltungen der Erfindung sind Gegenstand von jeweils abhängigen Ansprüchen.

Nach einem Aspekt der Erfindung wird eine Vorrichtung zum Separieren eines Werkstoffs von mindestens einem additiv hergestellten Bauteil bereitgestellt. Die Vorrichtung weist mindestens eine Positionierungsvorrichtung zum Ausrichten des mindestens einen Bauteils auf. Des Weiteren weist die Vorrichtung mindestens eine Schwingungsvorrichtung zum Versetzen des mindestens einen Bauteils in Schwingungen und eine Steuereinheit zum Ansteuern der mindestens einen Positionierungsvorrichtung und der mindestens einen Schwingungsvorrichtung auf.

Das mindestens eine Bauteil wurde vorzugsweise generativ hergestellt und weist nach dem beendeten Fertigungsvorgang mindestens einen Hohlraum auf, welcher zumindest teilweise mit einem ungenutzten Werkstoff aus dem Fluidbett oder Pulverbett gefüllt ist. Das mindestens eine Bauteil kann hierbei eine Geometrie aufweisen, welche mit Partikeln, Pulver oder einem Fluid gefüllt sein kann. Der überschüssige Werkstoff ist beispielsweise ein nicht-verfestigtes Grundmaterial.

Das mindestens eine Bauteil mit dem ungenutzten Werkstoff kann in oder an der Vorrichtung angeordnet werden. Insbesondere kann das mindestens eine Bauteil mittelbar oder unmittelbar mit der mindestens einen Positionierungsvorrichtung gekoppelt werden.

Durch die Vorrichtung kann das mindestens eine additiv hergestellte Bauteil mit unterschiedlichen Kräften beaufschlagt werden. Durch die mindestens eine Positionierungsvorrichtung und die mindestens eine Schwingungsvorrichtung können zusätzlich zu einer Schwerkraft wirkende Kräfte erzeugt und auf das mindestens eine Bauteil übertragen werden. Hierdurch kann der Werkstoff durch in das mindestens eine Bauteil eingebrachte Öffnungen aus dem mindestens einen Hohlraum entleert werden.

Die mindestens eine Schwingungsvorrichtung kann hierbei eine Haftreibung zwischen dem Werkstoff und einer Bauteiloberfläche reduzieren und somit einen Materialtransport begünstigen.

Durch die erfindungsgemäße Vorrichtung kann beispielsweise eine automatische Entleerung von im 3D-Druck hergestellten Bauteilen realisiert werden. Es wird dabei ein manueller Aufwand mit einer gesundheitlichen Belastung von Mitarbeitern durch den Werkstoff aus der additiven Fertigung verhindert oder zumindest reduziert.

Neben der Entleerung von Bauteilen aus dem 3D-Druck kann die erfindungsgemäße Vorrichtung zum Entleeren jeglicher Geometrien und jeglicher Füllungen, wie beispielsweise beliebiger Flüssigkeiten, verwendet werden.

Gemäß einer Ausführungsform der Vorrichtung ist das mindestens eine Bauteil über jeweils eine Schwingungsvorrichtung mechanisch mit der mindestens einen Positionierungsvorrichtung verbindbar. Es kann hierdurch eine indirekte Kopplung des mindestens einen Bauteils mit der mindestens einen Positionierungsvorrichtung umgesetzt werden. Die mindestens eine Schwingungsvorrichtung dient hierbei als eine Verbindung zu der mindestens einen Positionierungsvorrichtung. Es können somit erzeugbare Schwingungen effizient und unmittelbar auf das mindestens eine Bauteil übertragen werden. Die mindestens eine Schwingungsvor- richtung kann beispielsweise eine Vibrationsvorrichtung zum Reduzieren einer Haftreibung zwischen Partikeln oder zur Erhöhung einer Fließfähigkeit eines Monomerfluids sein.

Nach einem weiteren Ausführungsbeispiel der Vorrichtung ist die mindestens eine Positionierungsvorrichtung ein Roboter. Die Positionierungsvorrichtung kann hierbei für niederfrequente bzw. langsame Bewegungen des mindestens einen Bauteils eingesetzt werden. Diese Bewegungen des mindestens einen Bauteils können technisch besonders einfach durch einen Roboter oder einen Roboterarm ausgeführt werden.

Gemäß einem weiteren Ausführungsbeispiel der Vorrichtung ist das mindestens eine Bauteil um mindestens zwei orthogonal zueinander ausgerichtete Rotationsachsen durch die mindestens eine Positionierungsvorrichtung rotierbar. Der mindestens eine Roboter kann das mindestens eine Bauteil rotieren, sodass mithilfe der Gravitationskraft das mindestens eine Bauteil entleert wird. Vorteilhafterweise kann jegliche Rotation des mindestens einen Bauteils im Raum möglich sein. Beispielsweise kann das mindestens eine Bauteil um mindestens zwei Freiheitsgerade rotierbar sein, um das mindestens eine Bauteil gegenüber der Gravitation jede Richtung einnehmen zu lassen. Bei mehr als zwei Freiheitsgraden kann die Position des mindestens einen Bauteils im Raum platzsparend eingenommen werden. Bei Bauteilen mit bestimmten Symmetrie- oder Ähnlichkeitsbedingungen bzgl. einer Achse kann die Anzahl der Rotationsfreiheitsgerade verringert werden

Nach einem weiteren Ausführungsbeispiel der Vorrichtung ist das mindestens eine Bauteil durch die mindestens eine Positionie- rungsvorrichtung mit mindestens einer translatorischen Bewegung beaufschlagbar. Zusätzlich zu einer Rotation, kann der mindestens eine Roboter vorteilhafterweise eine Schüttelung des mindestens einen Bauteils ermöglichen, um den Entleerungsprozess zu unterstützen. Hierbei dient neben der Gravitationskraft die Trägheit des Bauteils und des Werkstoffs als zusätzliche "Kraft" zur Entleerung.

Gemäß einem weiteren Ausführungsbeispiel der Vorrichtung ist das mindestens eine Bauteil manuell oder automatisch um mindestens eine Rotationsachse rotierbar an der mindestens einen Positionierungsvorrichtung angeordnet. Sind nicht alle Rotationsachsen oder die Schüttelung des mindestens einen Bauteils realisiert, so können die entsprechenden Schritte manuell ausgeführt werden. Die Vorrichtung kann hierzu eine entsprechende Instruktion an einen Mitarbeiter ausgeben, um beispielsweise das mindestens eine Bauteil manuell um einen definierten Winkel vor einer weiteren Bearbeitung zu drehen.

Nach einem weiteren Ausführungsbeispiel der Vorrichtung ist das mindestens eine Bauteil durch die mindestens eine Schwingungs- vorrichtung mit kontinuierlich oder diskontinuierlich erzeugten Schwingungen beaufschlagbar. Zur Unterstützung des Entleerungsvorganges kann das mindestens eine Bauteil zusätzlich einer kontinuierlichen oder diskontinuierlichen Vibration ausgesetzt werden. Unter einer Vibration mit hohen Frequenzen kann die Haftreibung zwischen Partikeln des Werkstoffs reduziert werden. Sie verhalten sich damit ähnlich zu einer Flüssigkeit, wodurch der Entleerungsprozess unterstützt und beschleunigt werden kann.

Gemäß einem weiteren Ausführungsbeispiel der Vorrichtung ist eine Frequenz der durch die mindestens eine Schwingungsvorrichtung erzeugbaren Schwingungen an den Werkstoff anpassbar. Die Frequenzen können somit unterschiedlich oder variierbar sein, um Verkeilungen von Pulver mit einer niedrigen Frequenz lösen zu können und die Fluidisierung mit einer höheren Frequenz zu bewirken. Die Zeitpunkte der Vibration können hierbei abhängig von einer Geometrie des mindestens einen Bauteils gewählt werden.

Nach einem weiteren Ausführungsbeispiel weist die Vorrichtung mindestens einen Sensor zum Ermitteln einer überschüssigen Menge des Werkstoffs in dem mindestens einen Bauteil auf. Mittels zusätzlicher Sensorik, wie beispielsweise einer Röntgen- Apparatur, kann der aktuelle Zustand des mindestens einen Bauteils ermittelt oder geschätzt werden. Beispielsweise kann vor einem Entleerungsvorgang und nach einer definierten Zeit ein Füllgrad des mindestens einen Bauteils mit dem Werkstoff ermittelt werden. Die zweite Messung kann hierbei als eine Prüfung des Entleerungserfolgs durchführbar sein. Eine derartige Sensorik kann kostengünstig und robust in einem Fertigungsumfeld realisierbar sein.

Alternativ oder zusätzlich kann hierbei das mindestens eine Bauteil alleine oder mit zumindest einem Teil der Vorrichtung durch eine Waage gewogen werden. Die Ermittlung des Gewichts kann hierbei kontinuierlich über den gesamten Entleerungsvorgang oder zu definierten Zeiten durchgeführt werden. Hierbei nimmt das Gewicht des Bauteils durch Verlust des aufgenommenen Werkstoffs ab. Es kann hierbei auch der entleerte Werkstoff separat gewogen werden. Dies kann beispielsweise durch ein Wiegen einer Auffangschale realisiert werden. Das Gewicht der Schale nimmt hierbei über die Zeit zu. Beide Gewichtsmessungen können hierbei parallel zueinander ausgeführt werden, wodurch eine präzisere Zustandsermittlung realisierbar ist.

Des Weiteren kann der Entleerungszustand oder Entleerungsgrad des mindestens einen Bauteils durch weitere Verfahren, wie beispielsweise Ultraschallmessung oder Schwingungsanalysen, mittels entsprechender Algorithmen ermittelt oder geschätzt werden.

Die ermittelten Entleerungsgrade können zum Validieren oder zum Abgleichen mit einer Simulation des Entleerungsvorgangs in der Steuereinheit verwendet werden. Die entsprechende Simulation kann im Hinblick auf die eingesetzten Parameter und/oder den Füllzustand angepasst werden. Dieser Abgleich kann in definierten Intervallen wiederholt werden.

Vorteilhafterweise kann bei einer Verwendung eines vereinfachten Simulationsmodels die Anpassung eines Simulations-Parameters ausreichen, um die Simulation mit der Realität abzugleichen. Bei einem Parameter genügt eine Informationsquelle, das momentane Gewicht, um eine Anpassung der Simulation zur Übereinstimmung mit der Realität vorzunehmen. Somit kann die Sensorik aus einem Gewichtssensor aufgebaut sein.

Gemäß einem weiteren Ausführungsbeispiel der Vorrichtung steuert die Steuereinheit die mindestens eine Positionierungs- vorrichtung und die mindestens eine Schwingungsvorrichtung abhängig von einem virtuellen Modell des mindestens einen Bauteils. Hierdurch kann der Entleerungsvorgang durch eine Anpassung an eine geometrische Ausgestaltung des mindestens einen Bauteils schneller ausgeführt werden.

Nach einem weiteren Aspekt der Erfindung wird ein Verfahren zum Separieren eines Werkstoffs von mindestens einem additiv hergestellten Bauteil mit einer erfindungsgemäßen Vorrichtung bereitgestellt.

In einem Schritt wird ein computergeneriertes Modell des mindestens einen Bauteils von einer Steuereinheit empfangen.

Mindestens ein Hohlraum des virtuellen Modells des mindestens einen Bauteils wird durch die Steuereinheit virtuell mit dem tatsächlich verwendeten Werkstoff gefüllt.

Es wird eine Simulation eines vollständigen Entleerungsvorgangs des Werkstoffs aus dem mindestens einen Hohlraum durch mindestens eine Öffnung des mindestens einen Bauteils durch die Steuereinheit berechnet.

Anschließend wird der Werkstoff von dem mindestens einen Bauteil basierend auf der berechneten Simulation durch ein Ansteuern mindestens einer Positionierungsvorrichtung und/oder mindestens einer Schwingungsvorrichtung durch die Steuereinheit separiert.

Es kann somit ein optimierter Entleerungsvorgang durch die Steuereinheit basierend auf einem CAD(Computer Aided Design) -Modell des mindestens einen Bauteils berechnet werden. Dies geschieht vor einem Ansteuern der mindestens einen Positionierungsvorrichtung und/oder der mindestens einen Schwingungsvorrichtung. Somit kann im Vorfeld ein optimaler Entleerungsvorgang ermittelt und die Separation des Werkstoffs vom Bauteil optimal durchgeführt werden.

Die Steuereinheit kann vorzugsweise als Input eine CAD-Geometrie des produzierten Bauteils, gemeinsam mit möglichen Stützstrukturen und der Positionierung auf einer Bauplatte bzw. im Bauraum eines 3D-Druckers, erhalten. Als Ausgabe wird ein Steuerungscode bzw. ein Programm für den mindestens einen Roboter bzw. die mindestens eine Positionierungsvorrichtung erzeugt. In einer vorteilhaften Ausgestaltung kann dieser Steuerungscode ein entsprechend standardisierter Code, wie beispielsweise G-Code, sein.

Sollten nicht alle Anweisungen automatisch ausgeführt werden können, wie beispielsweise eine Beschränkung der Drehachsen, so können Anweisungen an einen Operator mittels einer Ausgabeeinheit ausgegeben werden.

Das Verfahren kann umgekehrt auch zum Befüllen von komplexen Geometrien verwendet werden. Beispielsweise kann durch das Verfahren eine Färbung oder eine Beschichtung von komplexen Innenräumen mit Fluiden oder Pulvern durchgeführt werden. Dies kann beispielsweise bei Industriekeramiken oder bei Befüllungen mit Materialien unterschiedlicher Eigenschaften vorteilhaft sein. Beispielsweise kann Kupferpulver auf eine isolierende Keramik aufgetragen, sogenanntes Washcoating von Katalysatoren, Tauchlackierungen, Betonieren, Gießen und dergleichen durchgeführt werden.

Gemäß einem Ausführungsbeispiel des Verfahrens werden in dem computergenerierten Modell des mindestens einen Bauteils kürzeste Wege eines im Modell eingeschlossenen Werkstoffs zu mindestens einer Öffnung oder kürzeste Entleerungszeiten des Werkstoffs durch die mindestens eine Öffnung ermittelt. Hierdurch kann eine zeitlich schnelle Entleerung simuliert und anschließend durchgeführt werden.

Nach einem weiteren Ausführungsbeispiel des Verfahrens wird die Simulation eines Entleerungsvorgangs des Werkstoffs aus dem mindestens einen Hohlraum mit einer virtuellen Ausrichtung des mindestens einen Bauteils basierend auf den ermittelten kürzesten Entleerungszeiten oder kürzesten Wegen des Werkstoffs zu der mindestens einen Öffnung durchgeführt. Hierzu kann das mindestens eine Bauteil abhängig von seiner Geometrie bzw. der Geometrie der Hohlräume relativ zu einer Gravitationskraft von der mindestens einen Positionierungsvorrichtung ausgerichtet und mit Schwingungen beaufschlagt werden. Die Ausrichtung kann nach definierten Intervallen verändert oder angepasst werden. Somit kann technisch einfach eine Entleerung des mindestens einen Bauteils automatisiert werden.

Gemäß einem weiteren Ausführungsbeispiel des Verfahrens wird die Simulation des Entleerungsvorgangs des Werkstoffs durch Änderungen der virtuellen Ausrichtung des mindestens einen Bauteils optimiert. Die Optimierung des Entleerungsvorgangs kann durch die Anpassung der Ausrichtungen des mindestens einen Bauteils computerbasiert einfach berechnet werden. Somit kann eine im Vorfeld durchgeführte Simulation zeitlich schnell umgesetzt werden.

Nach einem weiteren Ausführungsbeispiel des Verfahrens werden die kürzesten Entleerungszeiten des Werkstoffs durch ein heuristisches Verfahren ermittelt. Somit können durch Optimierung des Entleerungsvorgangs bereits existierende mathematische Mittel eingesetzt werden.

Zum Unterstützen oder Beschleunigen des Entleerungsvorgangs kann zusätzlich Druckluft eingesetzt werden. Der Einsatz von Druckluft kann hierbei in die Simulation implementiert werden. Somit können auch weitere zusätzliche Verfahren, wie beispielsweise Erzeugung von Schwingungsfrequenzen, in der Simulation aktiv berücksichtigt werden.

Die oben beschriebenen Eigenschaften, Merkmale und Vorteile dieser Erfindung sowie die Art und Weise, wie diese erreicht werden, werden klarer und deutlicher verständlich durch die Erläuterung der folgenden stark vereinfachten schematischen Darstellungen bevorzugter Ausführungsbeispiele. Hierbei zeigen
- FIG 1: eine schematische Darstellung einer Vorrichtung gemäß einem erfindungsgemäßen Ausführungsbeispiel und
- FIG 2: ein schematisches Ablaufdiagramm eines Verfahrens gemäß einem erfindungsgemäßen Ausführungsbeispiel.

In den Figuren weisen dieselben konstruktiven Elemente jeweils dieselben Bezugsziffern auf.

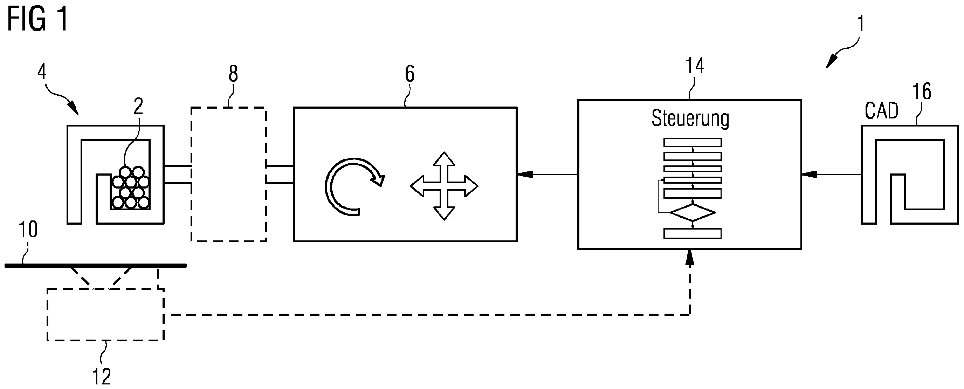

Die FIG 1 zeigt eine schematische Darstellung einer Vorrichtung 1 zum Separieren eines Werkstoffs 2 von mindestens einem additiv hergestellten Bauteil 4 gemäß einem erfindungsgemäßen Ausführungsbeispiel.

Die Vorrichtung 1 weist hier ein Bauteil 4 auf, welches indirekt mit einer Positionierungsvorrichtung 6 verbunden ist. Das Bauteil 4 ist über eine Schwingungsvorrichtung 8 mit der Positionierungsvorrichtung 6 verbunden.

Die Positionierungsvorrichtung 6 ist als ein Roboterarm 6 ausgestaltet und dient zum Ausrichten des Bauteils 4. Die Schwingungsvorrichtung 8 kann zum Beaufschlagen des Bauteils 4 mit hochfrequenten oder niederfrequenten Schwingungen eingesetzt werden. Der Roboterarm 6 kann dabei das Bauteil 4 gemeinsam mit der Schwingungsvorrichtung 8 gemäß den Pfeilen um mindestens eine Rotationsachse rotieren und translatorisch verfahren. Das Bauteil 4 kann automatisch durch den Roboterarm 6 einer Fertigungsumgebung, wie beispielsweise einem 3D Drucker, entnommen oder manuell am Roboterarm 6 durch einen Mitarbeiter angeordnet werden.

Unter dem Bauteil 4 in Richtung einer Schwerkraft ist eine Auffangschale 10 positioniert. Die Auffangschale 10 dient zum Aufnehmen eines vom Bauteil 4 separierten Werkstoffs 2 und ist auf einem Sensor 12 zum Ermitteln einer Masse des Werkstoffs 2 angeordnet. Der Sensor 12 ist hierbei eine Waage. Der Sensor 12 ist mit einer Steuereinheit 14 datenleitend gekoppelt.

Die Steuereinheit 14 weist eine Schnittstelle zum Ansteuern der Positionierungsvorrichtung 6 und der Schwingungsvorrichtung 8 auf. Des Weiteren weist die Steuereinheit 14 eine Schnittstelle zum Lesen und Auswerten von virtuellen Modellen 16 des Bauteils 4 auf.

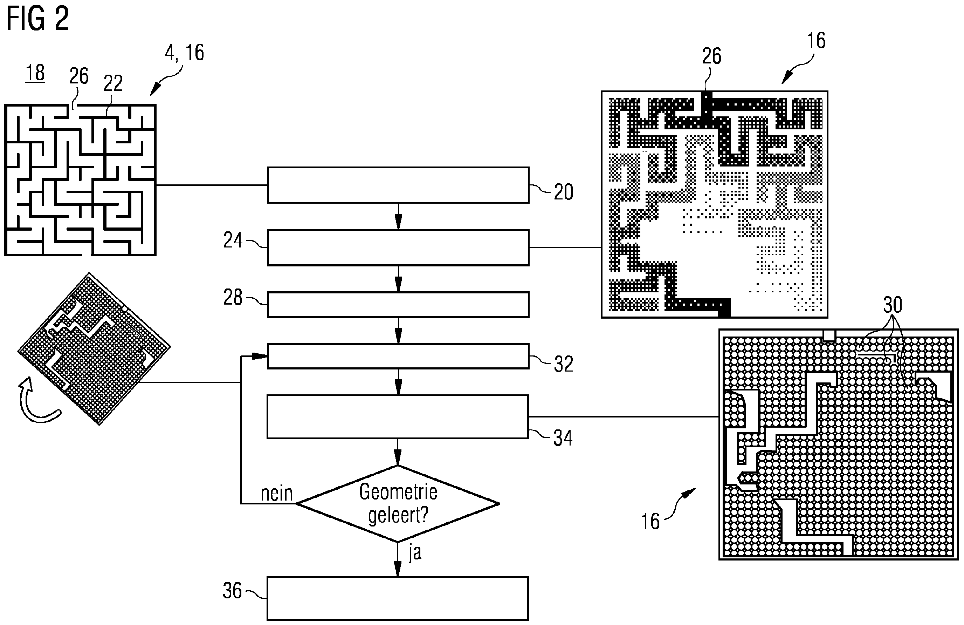

In der FIG 2 ist ein schematisches Ablaufdiagramm eines Verfahrens 18 gemäß eines erfindungsgemäßen Ausführungsbeispiels gezeigt. Zum Veranschaulichen des Verfahrens 18 ist ein anderes Bauteil 4 dargestellt als in der FIG 1.

In einem ersten Schritt wird ein virtuelles Modell 16 des Bauteils 4 in die Steuereinheit 14 eingelesen 20. Das virtuelle Modell 16 ist hier eine CAD-Geometrie.

Die CAD-Geometrie des additiv gefertigten Bauteils 4 kann in einem beliebigen Format, wie beispielsweise 3D manufacturing format .3mf, STEP .stp, STL .stl, sourcecode files hersteller- spezifischer Software und dergleichen, vorliegen. Diese Geometrie kann vorzugsweise auch Stützstrukturen 22 für den Fertigungsprozess enthalten, sofern diese im Druck vorgesehen waren. Ferner kann die CAD-Geometrie 16 die Positionierung des Bauteils 4 im Bauraum gegenüber einer Bodenplatte enthalten, an der das Bauteil 4 befestigt war.

In einem weiteren Schritt 24 werden kürzeste Abstände und/oder kürzeste Zeiten zu mindestens einem Ausgang bzw. einer Öffnung 26 des Bauteils 4 berechnet. Für jeden Punkt von einer nicht verfestigter Materie 2 im Bauteil 4 werden die kürzesten Abstände zum Ausgang berechnet bzw. eine Approximation ermittelt. Die kürzesten Abstände zur Öffnung 26 sind zum Verdeutlichen schattiert dargestellt, wobei dunklere Bereiche näher an einer Öffnung 26 des Bauteils 4 angeordnet sind als hellere Bereiche. Die Berechnung der kürzesten Entleerungszeiten kann hierbei äquivalent zu den Abständen ermittelt werden. In einer vorteilhaften Implementierung können die kürzesten Abstände mit Hilfe der Fast-Marching-Methode approximativ berechnet werden. Von jedem Punkt innerhalb der Geometrie 16 kann auf diese Weise der kürzeste Weg zum Ausgang berechnet werden, indem jeweils in die Richtung des stärksten Abstieges, d.h. in Richtung des Gradienten, des Abstandfeldes gegangen wird. Die beispielhafte Fast-Marching-Methode berechnet Abstände, indem sie eine Wellenausbreitung betrachtet und in jedem Raumpunkt die Ankunftszeit ermittelt. Hierbei ist der Ausgang 26 der Geometrie 16 der Ursprung. Breitet sich die Welle mit einer im ganzen Raum konstanten Geschwindigkeit von V=1 aus, so entsprechen die Ankunftszeiten der Welle genau den Abständen zum Ausgang bzw. zur Öffnung 26.

Eine alternative oder zusätzliche Betrachtung kann auch direkt im Sinne der Ankunfts-/Reise-Zeiten gegeben werden, d.h. die Partikel des Werkstoffs 2 sollten möglichst entlang des Gradienten der Ankunftszeit bewegt werden, da so die Zeit zum Ausgang 26 optimal verkürzt wird. Hierbei liegt zugrunde, dass die benötigte Zeit vom Ausgang 26 zu einem Punkt der Zeit vom selben Punkt zum Ausgang 26 entspricht.

Alternativ oder zusätzlich kann eine iterative Simulation des Partikelverhaltens des Werkstoffs 2 bei der Berechnung der Ankunftszeiten an einer Öffnung 26 durchgeführt werden.

In einem weiteren Schritt 28 wird die Geometrie 16 mit Partikeln 30 gefüllt. Die Geometrie 16 wird in der Steuereinheit 14 virtuell mit Material 2 für die Simulation komplett angefüllt, als ob diese Füllung im Rahmen des Produktionsprozesses entstanden sei. Hierbei kann ein virtueller Partikel 30 in der Simulation stellvertretend für viele reale Partikel 2 stehen. Bei Verwendung einer anderen Simulation kann die Füllung entsprechend anders realisiert werden, beispielsweise können bei Verwendung einer sogenannten Volume-of-Fluid Methode alle Volumen als gefüllt initialisiert werden.

Bei einem nächsten Schritt 32 des Verfahrens wird eine Ausrichtung des virtuellen Bauteils 16 ausgewählt. Die Wahl der aktuellen Ausrichtung bestimmt den Entleerungsprozess, bei dem die Schwerkraft die treibende Kraft ist, die durch eine Schüttelung über die Trägheit der Masse unterstützt werden kann. Die konkrete Wahl der Ausrichtung basiert auf einer Analyse des aktuellen Füllgrades und der jeweils kürzesten Wege. Beispielsweise kann die Drehung bzw. Ausrichtung des virtuellen Bauteils 16 derart gewählt werden, dass der jeweils erste Partikel 30 (im Sinne des Abstands zum Ausgang 26 / der zu erwartenden Entleerungszeit) entleert wird. D.h. anhand des kürzesten Weges dieses Partikels 30 zum Ausgang 26 wird die Ausrichtung berechnet. Im Allgemeinen repräsentiert dieser Partikel 30 eine Vielzahl realer Partikel 2, sodass bei der identischen realen Bewegung nicht nur ein Partikel entleert wird. Wird kein Partikel-basiertes Simulationsverfahren gewählt, kann bei diesem Schritt 32 die entsprechende Repräsentanz des Partikels 30 gewählt werden. Beispielsweise kann bei der Volume-of-Fluid-Methode ein am Ausgang 26 gelegenes gefülltes oder teilgefülltes Volumen berücksichtigt werden.

Alternativ kann nicht unmittelbar der erste Partikel 30 ausgewählt werden, sondern ein entsprechender alternativer Partikel 30. Zum Beispiel kann ein Partikel 30 mittels eines sogenannten p-Quantils bestimmt werden. Dabei wird der Partikel derart ausgewählt, dass 10 %, bevorzugt 5 %, besonders bevorzugt 3 % aller Partikel einen kürzeren Abstand zum Ausgang haben können. So kann ein Kompromiss zwischen der benötigten Auflösung für die Simulation und einer Anzahl der realen Partikel, die jeweils entleert werden, gewählt werden.

In einem weiteren Schritt 34 wird eine Simulation des Ausschüttvorgangs der Partikel 30 aus dem virtuellen Bauteil 16 durchgeführt. Da im Allgemeinen kein Blick in das Bauteil 4 möglich ist, muss die aktuelle Verteilung von Pulver 2 im Bauteil 4 geschätzt werden. Vorteilhafterweise kann dies auf einer Simulation basieren. Nachdem das Bauteil 4 in entsprechende Ausrichtung gedreht wurde wird daher der Entleerungsprozess
mittels einer Simulation berechnet. Die antreibende Kraft ist hierbei die Schwerkraft. Bei der Simulation kann die Drehung explizit mitberechnet werden (limitierte Drehgeschwindigkeit) oder als gegeben angesehen sein (unendliche Drehgeschwindigkeit) .

Mittels einer Schüttelung kann der Prozess durch die Trägheit der Masse unterstützt werden, wobei eine Schüttelung vorteilhafter- weise in der Simulation berücksichtigt wird. Durch die Verwendung der Schwingungsvorrichtung kann das Pulver "fluidisiert" werden bzw. die Viskosität eines Fluids 2 herabgesetzt werden, was eine simulationstechnische Behandlung vereinfacht, d.h. es genügen vereinfachte Simulationsmodelle, die nur die vereinfachte Abstoßung der Partikel untereinander (bzw. die Wandinteraktion) sowie vereinfachte Reibungsmodelle berücksichtigen. Die Zahl der relevanten Parameter kann somit reduziert werden, wodurch nur ein zu bestimmender effektiver Parameter bleibt, das Verhältnis der Abstoßungskräfte zu Reibungskräften bzw. eine entsprechende Zeitskalierung.

Alternativ kann auch die Vibration direkt in einer hochdetaillierten Simulation mit berücksichtigt werden.

Vorteilhafterweise werden die Partikel mithilfe einer Partikel-Simulation berechnet. Partikel-Simulations-Methoden können insbesondere auf Grafikprozessoren effizient berechnet werden. Es sind weitere Simulationsverfahren, wie beispielsweise auch eine Approximation mittels Kontinuumsmodellen unter der Verwendung der Volume-of-Fluid Methode, anwendbar.

Nach einem bestimmten Kriterium, wie beispielsweise der verstrichenen Zeit oder der maximale Geschwindigkeit der Partikel kleiner als ein Schwellwert, kann der Entleerungs- zustand überprüft und, sofern die Geometrie nicht entleert ist, gemäß dem Schritt 32 erneut verfahren werden.

Ist die Geometrie 16 entleert, so kann mit einem Schritt 36 weiterverfahren werden. Während der Simulation wird der Ausrichtungsprozess des virtuellen Bauteils 16 dokumentiert und auf Basis dieser Dokumentation ein Steuerungscode generiert. Dieser ist dann Grundlage der Steuerung. Dabei werden von der Steuereinheit 14 Steuerungscodes für die mindestens eine Positionierungsvorrichtung 6 und die mindestens eine Schwingungseinheit 8 generiert und diese anschließend angesteuert.

Vorteilhafterweise kann der Algorithmus bzw. das Verfahren in einer sogenannten CAM-Software als Modul integriert sein.

## Patentansprüche

1. Vorrichtung (1) zum Separieren eines Werkstoffs (2) von mindestens einem additiv hergestellten Bauteil (4), aufweisend:
- mindestens eine Positionierungsvorrichtung (6) zum Ausrichten des mindestens einen Bauteils (4),
- mindestens eine Schwingungsvorrichtung (8) zum Versetzen des mindestens einen Bauteils (4) in Schwingungen, sowie
- eine Steuereinheit (14) zum Ansteuern der mindestens einen Positionierungsvorrichtung (6) und der mindestens einen Schwingungsvorrichtung (8).

2. Vorrichtung nach Anspruch 1, wobei das mindestens eine Bauteil (4) über jeweils eine Schwingungsvorrichtung (8) mechanisch mit der mindestens einen Positionierungsvorrichtung (6) verbindbar ist.

3. Vorrichtung nach Anspruch 1 oder 2, wobei die mindestens eine Positionierungsvorrichtung (6) ein Roboter (6) ist.

4. Vorrichtung nach einem der Ansprüche 1 bis 3, wobei das mindestens eine Bauteil (4) um mindestens zwei orthogonal zueinander ausgerichtete Rotationsachsen durch die mindestens eine Positionierungsvorrichtung (6) rotierbar ist.

5. Vorrichtung nach einem der Ansprüche 1 bis 4, wobei das mindestens eine Bauteil (4) durch die mindestens eine Positionierungsvorrichtung (6) mit mindestens einer translatorischen Bewegung beaufschlagbar ist.

6. Vorrichtung nach einem der Ansprüche 1 bis 5, wobei das mindestens eine Bauteil (4) manuell oder automatisch um mindestens eine Rotationsachse rotierbar an der mindestens einen Positionierungsvorrichtung (6) angeordnet ist.

7. Vorrichtung nach einem der Ansprüche 1 bis 6, wobei das mindestens eine Bauteil (4) durch die mindestens eine Schwingungsvorrichtung (8) mit kontinuierlich oder diskontinuierlich erzeugten Schwingungen beaufschlagbar ist.

8. Vorrichtung nach Anspruch 7, wobei eine Frequenz der durch die mindestens eine Schwingungsvorrichtung (8) erzeugbaren Schwingungen an den Werkstoff (2) anpassbar ist.

9. Vorrichtung nach einem der Ansprüche 1 bis 8, wobei die Vorrichtung (1) mindestens einen Sensor (12) zum Ermitteln einer überschüssigen Menge des Werkstoffs (2) in dem mindestens einen Bauteil (4) aufweist.

10. Vorrichtung nach einem der Ansprüche 1 bis 9, wobei die Steuereinheit (14) die mindestens eine Positionierungsvorrichtung (6) und die mindestens eine Schwingungsvorrichtung (8) abhängig von einem virtuellen Modell (16) des mindestens einen Bauteils (4) steuert.

11. Verfahren (18) zum Separieren eines Werkstoffs (2) von mindestens einem additiv hergestellten Bauteil (4) mit einer Vorrichtung (1) nach einem der vorhergehenden Ansprüche, wobei
- ein computergeneriertes Modell (16) des mindestens einen Bauteils (4) von einer Steuereinheit (12) empfangen wird,
- mindestens ein Hohlraum des virtuellen Modells (16) des mindestens einen Bauteils (4) durch die Steuereinheit (12) virtuell mit dem Werkstoff (30) gefüllt wird,
- eine Simulation eines vollständigen Entleerungsvorgangs des Werkstoffs (30) aus dem mindestens einen Hohlraum durch mindestens eine Öffnung (26) des mindestens einen Bauteils (4) berechnet wird, und
- der Werkstoff (2) von dem mindestens einen Bauteil (2) basierend auf der berechneten Simulation durch ein Ansteuern mindestens einer Positionierungsvorrichtung (6) und/oder mindestens einer Schwingungsvorrichtung (8) durch die Steuereinheit (14) separiert wird.

12. Verfahren nach Anspruch 11, wobei in dem computergenerierten Modell (16) des mindestens einen Bauteils (4) kürzeste Wege eines im Modell eingeschlossenen Werkstoffs (30) zu mindestens einer Öffnung (26) oder kürzeste Entleerungszeiten des Werkstoffs (30) durch die mindestens eine Öffnung (26) ermittelt werden.

13. Verfahren nach Anspruch 11 oder 12, wobei die Simulation eines Entleerungsvorgangs des Werkstoffs (30) aus dem mindestens einen Hohlraum mit einer virtuellen Ausrichtung des mindestens einen Bauteils (16) basierend auf den ermittelten kürzesten Entleerungszeiten oder kürzesten Wegen des Werkstoffs (30) zu der mindestens einen Öffnung (26) durchgeführt wird.

14. Verfahren nach Anspruch 13, wobei die Simulation des Entleerungsvorgangs des Werkstoffs (30) durch Änderungen der virtuellen Ausrichtung des mindestens einen Bauteils (16) optimiert wird.

15. Verfahren nach einem der Ansprüche 11 bis 14, wobei die kürzesten Entleerungszeiten des Werkstoffs (30) durch ein heuristisches Verfahren ermittelt werden.
